(19) **Europäisches Patentamt / European Patent Office / Office européen des brevets**

(11) **EP 4 694 390 A1**

(12) **EUROPEAN PATENT APPLICATION**
published in accordance with Art. 153(4) EPC

(43) Date of publication:
**11.02.2026 Bulletin 2026/07**

(21) Application number: **24806356.2**

(22) Date of filing: **29.04.2024**

(51) International Patent Classification (IPC):
**H04W 52/18** (2009.01) **H04W 52/24** (2009.01)

(52) Cooperative Patent Classification (CPC):
**H04W 52/18; H04W 52/24; H04W 52/32**

(86) International application number:
**PCT/CN2024/090571**

(87) International publication number:
**WO 2024/235000 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.05.2023 CN 202310539674**

(71) Applicant: **Huawei Technologies Co., Ltd.**
**Shenzhen, Guangdong 518129 (CN)**

(72) Inventor: **YU, Yingjie**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **POWER CONTROL METHOD AND CONTROL APPARATUS**

(57) This application provides a power control method and control apparatus. In this application, at least one of information such as a power control parameter of an SL-PRS, maximum transmit power of a terminal device, a quantity of RBs occupied by a first resource used to transmit the SL-PRS, DL pathloss reference signal configuration information, and SL reference signal received power is obtained, to determine first transmit power at which the terminal device transmits the SL-PRS through the first resource; and at least one of information such as a power control parameter of a PSCCH, maximum transmit power of the terminal device, a quantity of RBs occupied by a second resource used to transmit the PSCCH, DL pathloss reference signal configuration information, and SL reference signal received power is obtained, to determine second transmit power at which the terminal device transmits the PSCCH through the second resource. This application implements power control of an SL-PRS and a PSCCH in an SL positioning technology.

FIG. 3

## Description

This application claims priority to Chinese Patent Application No. 202310539674.8, filed with the China National Intellectual Property Administration on May 12, 2023 and entitled "POWER CONTROL METHOD AND CONTROL APPARATUS", which is incorporated herein by reference in its entirety.

## TECHNICAL FIELD

This application relates to the field of wireless communication technologies, and in particular, to a power control method and control apparatus.

## BACKGROUND

Sidelink (sidelink, SL) positioning is one of cellular-vehicle to everything (cellular-vehicle to everything, C-V2X) wireless positioning technologies, and related technical research and standard development have been carried out in the 3rd generation partnership project (3rd generation partnership project, 3GPP) release 18 (release 18).

The SL positioning may be used to implement mutual measurement and positioning between terminal devices (such as vehicles) in an autonomous driving scenario. For example, after a first terminal device sends a signal to a second terminal device, the second terminal device detects the signal sent by the first terminal device, so that a relative position relationship between the first terminal device and the second terminal device can be determined.

To ensure that the second terminal device can detect the signal sent by the first terminal device, transmit power of the signal needs to be controlled. However, in an SL positioning technology, a solution about how to control transmit power of a signal is not provided.

## SUMMARY

This application provides a power control method and control apparatus, to provide a power control solution for SL-PRS transmission and PSCCH transmission in an SL positioning technology.

According to a first aspect, this application provides a power control method, where the method is applied to a terminal device, and the method includes: obtaining first information, where the first information includes one or more of the following: a power control parameter of a sidelink positioning reference signal SL-PRS, maximum transmit power of the terminal device, a quantity of resource blocks RBs occupied by a first resource used to transmit the SL-PRS, downlink DL pathloss reference signal configuration information, and SL reference signal received power; determining, based on the first information, first transmit power at which the terminal device transmits the SL-PRS through the first resource; obtaining second information, where the second information includes one or more of the following: a power control parameter of a physical sidelink control channel PSCCH, the maximum transmit power of the terminal device, a quantity of RBs occupied by a second resource used to transmit the PSCCH, the DL pathloss reference signal configuration information, and the SL reference signal received power, where the first resource and the second resource belong to a same resource pool; and determining, based on the second information, second transmit power at which the terminal device transmits the PSCCH through the second resource.

The method may be performed by a first terminal device, or may be performed by a component (for example, a processor, a chip, or a chip system) of the first terminal device.

Optionally, the power control parameter of the sidelink positioning reference signal (sidelink positioning reference signal, SL-PRS) and the power control parameter of the physical sidelink control channel (physical sidelink control channel, PSCCH) may be configured by a network device (for example, a base station). A specific configuration process is not limited in this application.

For example, after configuring the power control parameter of the SL-PRS and the power control parameter of the PSCCH for the first terminal device, the base station may transmit the power control parameter of the SL-PRS and the power control parameter of the PSCCH to the first terminal device through a radio resource control (radio resource control, RRC) message.

The power control parameter of the SL-PRS may include at least one of the following: a parameter sl-MaxTx-Power-SLPRS indicating SL-PRS transmit power determined based on a channel busy ratio (channel busy ratio, CBR) and a transmission priority of the first resource in the resource pool; a parameter dl-P0-SLPRS indicating, based on DL power control, first receive power of an SL-PRS a receiving device expects to receive; a parameter dl-Alpha-SLPRS indicating, based on the DL power control, a first compensation factor of a first DL pathloss; a parameter sl-PO-SLPRS indicating, based on SL power control, second receive power of the SL-PRS the receiving device expects to receive; and a parameter sl-Alpha-SLPRS indicating, based on the SL power control, a second compensation factor of a first SL pathloss.

The power control parameter of the PSCCH includes at least one of the following: a parameter sl-MaxTxPower-RS indicating PSCCH transmit power determined based on a CBR and a transmission priority of the second resource in the resource pool; a parameter dl-PO-RS indicating, based on the DL power control, third receive power of a PSCCH the receiving device expects to receive; a parameter dl-Alpha-RS indicating, based on the DL power control, a third compensation factor of a second DL pathloss; a parameter sl-PO-RS indicating, based on the SL power control, fourth receive power of the PSCCH the receiving device expects to receive; and a parameter sl-Alpha-RS indicating, based on the SL power control, a fourth compensation factor of a second SL pathloss.

The maximum transmit power of the terminal device is determined by performance of the terminal device. The power may be configured in the network device (for example, the base station), or may be configured in the terminal device.

Optionally, if the power is configured in the network device (for example, the base station), the base station may send power information to the first terminal device; or if the power is configured in the terminal device, the terminal device may invoke the power information.

The first resource refers to a physical resource used to transmit an SL-PRS in an SL positioning resource pool, and the second resource refers to a physical resource used to transmit a PSCCH in the SL positioning resource pool, where the first resource and the second resource belong to the same resource pool.

Optionally, the first resource and the second resource may be physical resources occupied by a same terminal device, and the first resource and the second resource belong to the same resource pool.

In an example, the first resource may be a physical resource occupied when the first terminal device transmits the SL-PRS, the second resource may be a physical resource occupied when the first terminal device transmits the PSCCH, and the first resource and the second resource may both belong to the SL positioning resource pool.

In a possible implementation, the SL positioning resource pool and a physical layer structure in the resource pool may be pre-configured in advance, and related configuration information may be stored in the network device or the terminal device in advance.

Optionally, if the configuration information is stored in the network device (for example, the base station), the base station may send, to the terminal device, the quantity of resource blocks (resource block, RB) occupied by the first resource used to transmit the SL-PRS and the quantity of RBs occupied by the second resource used to transmit the PSCCH; or if the configuration information is stored in the terminal device, the terminal device may invoke the configuration information.

Optionally, the downlink (downlink, DL) pathloss reference signal configuration information may be configured by the network device (for example, the base station). This is not specifically limited in this application.

For example, the DL pathloss configuration information configured by the base station for the first terminal device may be information in a pathloss reference signal (pathloss reference signal) parameter package.

For example, the pathloss reference signal parameter package may include cell indexes of one or more network devices. The first terminal device may measure and select a DL pathloss reference signal based on the indexes, and may further determine a DL pathloss. The DL pathloss reference signal may be a downlink positioning reference signal (DL-PRS), or may be a synchronization signal/physical broadcast channel block (SS (synchronization signal)/PBCH Block, SSB). This is not limited in this application.

Optionally, the SL reference signal received power may be obtained from the receiving device. For example, after receiving sidelink control information (sidelink control information, SCI) transmitted by the first terminal device through the PSCCH, the receiving device obtains the SL reference signal received power (reference signal received power, RSRP) through measurement based on a de-modulation reference signal (de-modulation reference signal, DMRS) in the SCI signal, and feeds back the SL reference signal received power to the first terminal device. Correspondingly, the first terminal device receives the SL reference signal received power.

In this technical solution, respective sets of independent power control parameters are configured for the SL-PRS and the PSCCH, so that the first terminal device can separately determine the SL-PRS transmit power and the PSCCH transmit power based on the configured power control parameters, thereby implementing power control in an SL positioning technology.

With reference to the first aspect, in a possible implementation, the first transmit power is a smallest value in a first power set, and the first power set includes at least one of the following power: the maximum transmit power of the terminal device, SL-PRS transmit power determined based on a channel busy ratio and a transmission priority of the first resource in the resource pool, third transmit power, and fourth transmit power; the third transmit power is related to first receive power of an SL-PRS a receiving device expects to receive, a quantity of first RBs, a first DL pathloss, and a first compensation factor of the first DL pathloss; the fourth transmit power is related to second receive power of the SL-PRS the receiving device expects to receive, the quantity of first RBs, a first SL pathloss, and a second compensation factor of the first SL pathloss; and the quantity of first RBs is the quantity of RBs occupied by the first resource.

In this implementation, the SL-PRS transmit power determined based on the channel busy ratio and the transmission priority of the first resource in the resource pool may be indicated by the power control parameter sl-MaxTxPower-SLPRS of the SL-PRS. If the parameter is not configured, the SL-PRS transmit power determined based on the channel busy ratio and the transmission priority of the first resource in the resource pool may be equal to maximum transmit power of the first terminal device.

Optionally, the first receive power may be indicated by the power control parameter dl-PO-SLPRS of the SL-PRS. If the parameter is not configured, the first receive power may be a smaller value between the maximum transmit power of the first terminal device and the SL-PRS transmit power determined based on the channel busy ratio CBR and the priority of the first resource in the resource pool. The second receive power may be indicated by the power control parameter sl-PO-SLPRS of the SL-PRS. If the parameter is not configured, the second receive power may be a smaller value between the maximum transmit power of the first terminal device and the SL-PRS transmit power determined based on the channel busy ratio CBR and the priority of the first resource in the resource pool.

Optionally, the first DL pathloss is a DL pathloss determined by the first terminal device based on the DL pathloss reference signal configuration information configured by the network device (for example, the base station) for the SL-PRS. The first compensation factor may be indicated by the power control parameter dl-Alpha-SLPRS of the SL-PRS. If the parameter is not configured, the first compensation factor may be 1.

Optionally, the first SL pathloss is an SL pathloss determined by the first terminal device based on L3 RSRP that is generated based on L1 RSRP fed back by the second terminal device, and the first SL pathloss is a difference between SL-PRS reference transmit power and the L3 RSRP. The second compensation factor may be indicated by the power control parameter sl-Alpha-SLPRS of the SL-PRS. If the parameter is not configured, the second compensation factor may be 1.

With reference to the first aspect, in a possible implementation, the second transmit power is a smallest value in a second power set, and the second power set includes at least one of the following power: the maximum transmit power of the terminal device, PSCCH transmit power determined based on a channel busy ratio and a transmission priority of the second resource in the resource pool, fifth transmit power, and sixth transmit power; the fifth transmit power is related to third receive power of a PSCCH the receiving device expects to receive, a quantity of second RBs, a second DL pathloss, and a third compensation factor of the second DL pathloss; the sixth transmit power is related to fourth receive power of the PSCCH the receiving device expects to receive, the quantity of second RBs, a second SL pathloss, and a fourth compensation factor of the second SL pathloss; and the quantity of second RBs is the quantity of RBs occupied by the second resource.

In this implementation, the PSCCH transmit power determined based on the channel busy ratio and the transmission priority of the second resource in the resource pool may be indicated by the power control parameter sl-MaxTxPower-RS of the PSCCH. If the parameter is not configured, the PSCCH transmit power determined based on the channel busy ratio CBR and the transmission priority of the second resource in the resource pool may be equal to the maximum transmit power of the first terminal device.

Optionally, the third receive power may be indicated by the power control parameter dl-PO-RS of the PSCCH. If the parameter is not configured, the third receive power may be a smaller value between the maximum transmit power of the first terminal device and the transmit power determined based on the channel busy ratio CBR and the priority of the second resource in the resource pool. The fourth receive power may be indicated by the power control parameter sl-P0-RS of the PSCCH. If the parameter is not configured, the fourth receive power may be a smaller value between the maximum transmit power of the first terminal device and the PSCCH transmit power determined based on the channel busy ratio CBR and the priority of the second resource in the resource pool.

Optionally, the second DL pathloss is a DL pathloss determined by the first terminal device based on the DL pathloss reference signal configuration information configured by the network device (for example, the base station) for the PSCCH. The third compensation factor may be indicated by the power control parameter dl-Alpha-RS of the PSCCH. If the parameter is not configured, the first compensation factor may be 1.

Optionally, the second SL pathloss is an SL pathloss determined by the first terminal device based on the L3 RSRP that is generated based on the L1 RSRP fed back by the second terminal device, and the second SL pathloss is a difference between PSCCH reference transmit power and the L3 RSRP. The fourth compensation factor may be indicated by the power control parameter sl-Alpha-RS of the PSCCH. If the parameter is not configured, the fourth compensation factor may be 1.

With reference to the first aspect, in a possible implementation, the first receive power is the same as the third receive power, and the first compensation factor is the same as the third compensation factor; and/or the second receive power is the same as the fourth receive power, and the second compensation factor is the same as the fourth compensation factor.

In this implementation, the SL-PRS and the PSCCH may have same RB-level power.

That the SL-PRS and the PSCCH have the same RB-level power may be understood as follows: The SL-PRS and the PSCCH have same transmit power on one symbol in one RB. That the SL-PRS and the PSCCH have the same RB-level power may also be understood as follows: The SL-PRS and the PSCCH have same power spectral density (power spectral density, PSD). A symbol is an orthogonal frequency division multiplexing (orthogonal frequency division multiplexing, OFDM) symbol (symbol).

In this implementation, the SL-PRS and the PSCCH have the same RB-level power, so that all power control solutions of an SL technology (for example, the SL positioning technology or an SL communication technology) are power control solutions with same PSD, thereby ensuring consistency of power control implementation in the SL technology. In addition, in both processes of implementing SL positioning and SL communication, after receiving a signal sent by the first terminal device, the second terminal device needs to demodulate the received signal, and a demodulation process needs to be implemented in the RB. Therefore, in this implementation, in the process of implementing SL positioning, the terminal device can further use a signal demodulation solution that is the same as that in existing SL communication, and a signal demodulation solution used for SL positioning does not need to be reconfigured for the terminal device. This simplifies an implementation process of the power control solution for SL positioning, and saves resources.

With reference to the first aspect, in a possible implementation, the third receive power is related to the first receive power and a transmission comb value of the SL-PRS, and the first compensation factor is the same as the third compensation factor; and/or the fourth receive power is related to the second receive power and the transmission comb value of the SL-PRS, and the second compensation factor is the same as the fourth compensation factor.

In this implementation, the SL-PRS and the PSCCH may have same resource element (resource element, RE)-level power.

That the SL-PRS and the PSCCH have the same RE-level power may be understood as follows: REs used to transmit the SL-PRS and the PSCCH have same transmit power. That the SL-PRS and the PSCCH have the same RE-level power may also be referred to as follows: The SL-PRS and the PSCCH have a same energy per resource element (energy per resource element, EPRE).

In this implementation, the SL-PRS and the PSCCH have the same EPRE, so that when the second terminal device detects information sent by the first terminal device to implement SL positioning, a resource detection manner same as that of the existing SL communication can be used. This simplifies the implementation process of the power control solution for SL positioning, and saves resources.

With reference to the first aspect, in a possible implementation, the third receive power, the first receive power, and the transmission comb value of the SL-PRS satisfy the following relation:

$$P_{O_{PRS},D} + 10\log_{10}(\text{Comb}) = P_{O_{PSCCH},D}$$

where $P_{O_{PRS},D}$ is the first receive power, Comb is the transmission comb value of the SL-PRS, and $P_{O_{PSCCH},D}$ is the third receive power.

With reference to the first aspect, in a possible implementation, the fourth receive power, the second receive power, and the transmission comb value of the SL-PRS satisfy the following relation:

$$P_{O_{PRS},SL} + 10\log_{10}(\text{Comb}) = P_{O_{PSCCH},SL}$$

where $P_{O_{PRS},SL}$ is the second receive power, Comb is the transmission comb value of the SL-PRS, and $P_{O_{PSCCH},SL}$ is the fourth receive power.

With reference to the first aspect, in a possible implementation, the third receive power is related to the first receive power, the quantity of first RBs, the quantity of second RBs, and a transmission comb value of the SL-PRS, and the first compensation factor is the same as the third compensation factor; and/or the fourth receive power is related to the second receive power, the quantity of first RBs, the quantity of second RBs, and the transmission comb value of the SL-PRS, and the second compensation factor is the same as the fourth compensation factor.

In this implementation, the SL-PRS and the PSCCH may have same symbol-level power.

That the SL-PRS and the PSCCH have the same symbol-level power may be understood as follows: The SL-PRS and the PSCCH have same transmit power on one symbol in a bandwidth part (bandwidth part, BWP).

In this implementation, the SL-PRS and the PSCCH have the same symbol-level power, so that the terminal device does not need additional power switching time during SL-PRS transmission and PSCCH transmission, thereby reducing difficulty in implementing the power control solution for SL positioning.

With reference to the first aspect, in a possible implementation, the third receive power, the first receive power, the quantity of first RBs, the quantity of second RBs, and the transmission comb value of the SL-PRS satisfy the following relation:

$$P_{O_{PRS},D} + 10\log_{10}\left(\frac{M_{RB}^{PRS}(i)}{\text{Comb} * M_{RB}^{PSCCH}(i)}\right) = P_{O_{PSCCH},D}$$

where $P_{O_{PRS},D}$ is the first receive power, Comb is the transmission comb value of the SL-PRS, $M_{RB}^{PRS}(i)$ is the quantity of first RBs, $M_{RB}^{PSCCH}(i)$ is the quantity of second RBs, and $P_{O_{PSCCH},D}$ is the third receive power.

With reference to the first aspect, in a possible implementation, the fourth receive power, the second receive power, the quantity of first RBs, the quantity of second RBs, and the transmission comb value of the SL-PRS satisfy the following relation:

$$P_{O_{PRS},SL} + 10\log_{10}\left(\frac{M_{RB}^{PRS}(i)}{\text{Comb} * M_{RB}^{PSCCH}(i)}\right) = P_{O_{PSCCH},SL}$$

where $P_{O_{PRS},SL}$ is the second receive power, Comb is the transmission comb value of the SL-PRS, $M_{RB}^{PRS}(i)$ is the quantity of first RBs, $M_{RB}^{PSCCH}(i)$ is the quantity of second RBs, and $P_{O_{PSCCH},SL}$ is the fourth receive power.

With reference to the first aspect, in a possible implementation, the third transmit power, the first receive power, the quantity of first RBs, the first DL pathloss, and the first compensation factor satisfy the following relation:

$$P_{PRS,D}(i) = P_{O_{PRS},D} + 10\log_{10}\left(2^{\mu} * M_{RB}^{PRS}(i)\right) + \alpha_{PRS,D} * PL_{D1}$$

where $P_{PRS,D}(i)$ is the third transmit power, $P_{O_{PRS},D}$ is the first receive power, $\mu$ is a constant coefficient, $M_{RB}^{PRS}(i)$ is the quantity of first RBs, $\alpha_{PRS,D}$ is the first compensation factor, and $PL_{D1}$ is the first DL pathloss.

With reference to the first aspect, in a possible implementation, the fourth transmit power, the second receive power, the quantity of first RBs, the first SL pathloss, and the second compensation factor satisfy the following relation:

$$P_{PRS,SL}(i) = P_{O_{PRS},SL} + 10\log_{10}\left(2^{\mu} * M_{RB}^{PRS}(i)\right) + \alpha_{PRS,SL} * PL_{SL1}$$

where $P_{PRS,SL}(i)$ is the fourth transmit power, $P_{O_{PRS},SL}$ is the second receive power, $\mu$ is a constant coefficient, $M_{RB}^{PRS}(i)$ is the quantity of first RBs, $\alpha_{PRS,SL}$ is the second compensation factor, and $PL_{SL1}$ is the first SL pathloss.

With reference to the first aspect, in a possible implementation, the fifth transmit power, the third receive power, the quantity of second RBs, the second DL pathloss, and the third compensation factor satisfy the following relation:

$$P_{PSCCH,D}(i) = P_{O_{PSCCH},D} + 10\log_{10}\left(2^{\mu} * M_{RB}^{PSCCH}(i)\right) + \alpha_{PSCCH,D} * PL_{D2}$$

where $P_{PSCCH,D}(i)$ is the fifth transmit power, $P_{O_{PSCCH},D}$ is the third receive power, $\mu$ is a constant coefficient, $M_{RB}^{PSCCH}(i)$ is the quantity of second RBs, $\alpha_{PSCCH,D}$ is the third compensation factor, and $PL_{D2}$ is the second DL pathloss.

With reference to the first aspect, in a possible implementation, the sixth transmit power, the fourth receive power, the quantity of second RBs, the second SL pathloss, and the fourth compensation factor satisfy the following relation:

$$P_{PSCCH,SL}(i) = P_{O_{PSCCH},SL} + 10\log_{10}\left(2^{\mu} * M_{RB}^{PSCCH}(i)\right) + \alpha_{PSCCH,SL} * PL_{SL2}$$

where $P_{PSCCH,SL}(i)$ is the sixth transmit power, $P_{O_{PSCCH},SL}$ is the fourth receive power, $\mu$ is a constant coefficient, $M_{RB}^{PSCCH}(i)$ is the quantity of second RBs, $\alpha_{PSCCH,SL}$ is the fourth compensation factor, and $PL_{SL2}$ is the second SL pathloss.

According to a second aspect, this application provides a power control method, where the method is applied to a base station device, and the method includes: sending first information, where the first information includes one or more of the following: a power control parameter of a sidelink positioning reference signal SL-PRS, a power control parameter of a physical sidelink control channel PSCCH, maximum transmit power of a terminal device, a quantity of resource blocks RBs occupied by a first resource used to transmit the SL-PRS, a quantity of RBs occupied by a second resource used to transmit the PSCCH, and downlink DL pathloss reference signal configuration information; and the first resource and the second resource belong to a same resource pool.

The method may be performed by a base station device, or may be performed by a component (for example, a processor, a chip, or a chip system) of the base station device.

Optionally, the first resource and the second resource may be physical resources occupied by a same terminal device, and the first resource and the second resource belong to the same resource pool.

In an example, the first resource may be a physical resource occupied when the first terminal device transmits the SL-PRS, the second resource may be a physical resource occupied when the first terminal device transmits the PSCCH, and the first resource and the second resource may both belong to an SL positioning resource pool.

According to a third aspect, this application provides a power control apparatus. The apparatus includes various modules configured to implement the method in the first aspect or any one of the implementations of the first aspect, and each module may be implemented in a form of hardware and/or software.

For example, the apparatus may include a processing module and a transceiver module. The transceiver module is configured to obtain first information, where the first information includes one or more of the following: a power control parameter of a sidelink positioning reference signal SL-PRS, maximum transmit power of the terminal device, a quantity of resource blocks RBs occupied by a first resource used to transmit the SL-PRS, downlink DL pathloss reference signal configuration information, and SL reference signal received power. The processing module is configured to determine, based on the first information, first transmit power at which the terminal device transmits the SL-PRS through the first resource. The transceiver module is further configured to obtain second information, where the second information includes one or more of the following: a power control parameter of a physical sidelink control channel PSCCH, the maximum transmit power of the terminal device, a quantity of RBs occupied by a second resource used to transmit the PSCCH, the DL pathloss reference signal configuration information, and the SL reference signal received power, where the first resource and the second resource belong to a same resource pool. The processing module is further configured to determine, based on the second information, second transmit power at which the terminal device transmits the PSCCH through the second resource.

Optionally, the apparatus may be a first terminal device, or may be a chip used in the first terminal device.

According to a fourth aspect, this application provides a power control apparatus. The apparatus includes various modules configured to implement the method in the second aspect or any one of the implementations of the second aspect, and each module may be implemented in a form of hardware and/or software.

For example, the apparatus may include a transceiver module. The transceiver module is configured to send first information, where the first information includes one or more of the following: a power control parameter of a sidelink positioning reference signal SL-PRS, a power control parameter of a physical sidelink control channel PSCCH, maximum transmit power of a terminal device, a quantity of resource blocks RBs occupied by a first resource used to transmit the SL-PRS, a quantity of RBs occupied by a second resource used to transmit the PSCCH, and downlink DL pathloss reference signal configuration information; and the first resource and the second resource belong to a same resource pool.

Optionally, the apparatus may be a base station device, or may be a chip used in the base station device.

According to a fifth aspect, this application provides a power control apparatus, including a processor. The processor is coupled to a memory, and may be configured to execute instructions in the memory, to implement the method in the first aspect or any one of the possible implementations of the first aspect. Optionally, the apparatus further includes the memory. Optionally, the apparatus further includes a communication interface, and the processor is coupled to the communication interface.

According to a sixth aspect, this application provides a power control apparatus, including a processor. The processor is coupled to a memory, and may be configured to execute instructions in the memory, to implement the method in the second aspect or any one of the possible implementations of the second aspect. Optionally, the apparatus further includes the memory. Optionally, the apparatus further includes a communication interface, and the processor is coupled to the communication interface.

According to a seventh aspect, this application provides a communication system. The system includes the apparatus in the third aspect or the fifth aspect, and includes the apparatus in the fourth aspect or the sixth aspect.

According to an eighth aspect, this application provides a computer-readable medium. The computer-readable medium stores a program code to be executed by a device, and the program code includes the method that is used to perform the first aspect and the second aspect or any one of the possible implementations of the first aspect and the second aspect.

According to a ninth aspect, this application provides a computer program product including instructions. When the computer program product is run on a computer, the computer is enabled to perform the method in the first aspect and the second aspect or any one of the possible implementations of the first aspect and the second aspect.

**BRIEF DESCRIPTION OF DRAWINGS**

FIG. 1 is a diagram of a wireless network coverage scenario according to an embodiment of this application;
FIG. 2 is a diagram of a physical layer structure of an SL positioning resource pool according to an embodiment of this application;

FIG. 3 is a diagram of a power control method according to an embodiment of this application;

FIG. 4 is a diagram of a structure of a power control apparatus according to an embodiment of this application; and

FIG. 5 is a diagram of a structure of a power control apparatus according to another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

## DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

Cellular-vehicle to everything (cellular-vehicle to everything, C-V2X) is a major candidate technology for current global construction of vehicle to everything, and supports cellular communication and terminal sidelink (sidelink, SL) communication. Considering that the SL communication is not limited by coverage of a cellular network and a global navigation satellite system, combination with a positioning technology can support positioning in a plurality of scenarios of the vehicle to everything, and satisfy positioning requirements of the vehicle to everything on low latency, high reliability, and high precision. Therefore, in the 3rd generation partnership project (3rd generation partnership project, 3GPP) radio access network (radio access network, RAN) conference, it is decided to carry out related technical research and standard development for an SL positioning technology in release 18 (release 18).

From a perspective of a vehicle to everything application scenario, service applications supported by the SL positioning technology mainly include autonomous driving, traffic safety, an information service, and the like. In addition, as a moving entity, a vehicle may experience different application scenarios, including a highway, an urban road, a closed park, an underground garage, and the like. Therefore, in addition to the vehicle to everything application scenario, a positioning scenario related to a wireless network coverage area also needs to be considered.

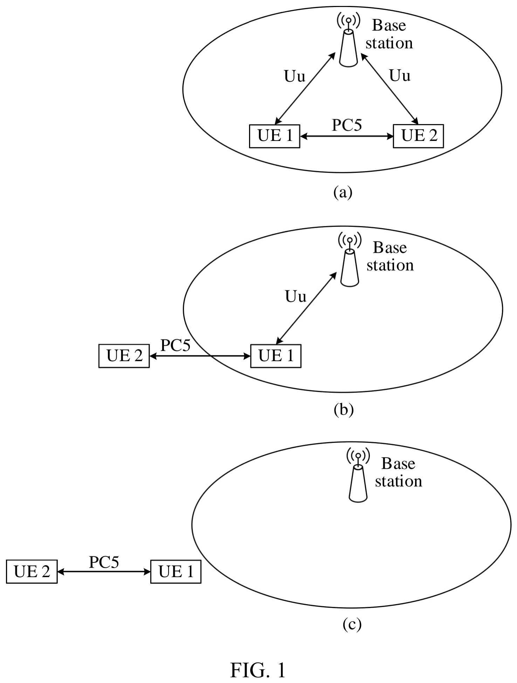

FIG. 1 is a diagram of a wireless network coverage scenario to which an embodiment of this application may be applied. As shown in FIG. 1, the wireless network coverage scenario includes a wireless network device and terminal devices (user equipment, UE). The wireless network device is, for example, a base station in FIG. 1, and the terminal devices are, for example, a first terminal device (UE 1) and a second terminal device (UE 2) in FIG. 1.

The base station may include a plurality of forms such as a macro base station, a micro base station, a relay station, and an access point. For example, the base station in embodiments of this application may be a base station in new radio (new radio, NR). A base station in 5th generation mobile communication network (5th generation mobile network, 5G) NR may also be referred to as a transmission reception point (transmission reception point, TRP) or a next generation NodeB (next generation NodeB, gNB), or may be a base transceiver station (base transceiver station, BTS) in a global system for mobile communications (global system for mobile communications, GSM) or code division multiple access (code division multiple access, CDMA), or may be a NodeB (NodeB, NB) in a wideband code division multiple access (wideband code division multiple access, WCDMA) system, or may also be an evolved NodeB (evolutional NodeB, eNB or eNodeB) in a long term evolution (long term evolution, LTE) system.

The UE includes a handheld device, a vehicle-mounted device, a wearable device, or a computing device having a wireless communication function. For example, the UE may be a mobile phone (mobile phone), a tablet computer, or a computer having a wireless transceiver function. Alternatively, the UE may be a virtual reality (virtual reality, VR) terminal device, an augmented reality (augmented reality, AR) terminal device, a wireless terminal in industrial control, a wireless terminal in autonomous driving, a wireless terminal in remote medical, a wireless terminal in a smart grid, a wireless terminal in a smart city (smart city), a wireless terminal in smart home (smart home), or the like.

As shown in FIG. 1, an example in which two UEs participate in SL positioning is used. (a) in FIG. 1 is an in-coverage scenario in the wireless network coverage scenario, and the in-coverage scenario means that both the two UEs are in a network coverage area of the base station. (b) in FIG. 1 is a partial-coverage scenario in the wireless network coverage scenario, and the partial-coverage scenario means that one UE (for example, the UE 1) is in the network coverage area of the base station, and the other UE (for example, the UE 2) is outside the network coverage area of the base station. (c) in FIG. 1 is an out-of-coverage scenario in the wireless network coverage scenario, and the out-of-coverage area scenario means that both the two UEs are outside the network coverage area of the base station. A circle in FIG. 1 is used to schematically represent the network coverage area of the base station.

Optionally, the UE may perform switching between the in-coverage scenario, the partial-coverage scenario, and the out-of-coverage scenario.

In this embodiment of this application, optionally, a quantity of UEs may not be limited to 2.

In this embodiment, in the wireless network coverage scenario shown in FIG. 1, if the UE is in the coverage area of the base station, the UE may receive, through a downlink (downlink, DL), data sent by the base station, or may send data to the base station through an uplink (uplink, UL).

Optionally, the base station may communicate with the UE through a Uu interface.

It should be noted that, in this embodiment of this application, optionally, the UE 1 may be a service sending device, or may be a service receiving device, and the UE 2 may be a service sending device, or may be a service receiving device.

For ease of description and understanding, in this embodiment of this application, an example in which the UE 1 may be the service sending device and the UE 2 may be the service receiving device is used for description.

For example, in the wireless network coverage scenario shown in FIG. 1, the UE 1 may send sidelink control information (sidelink control information, SCI) to the UE 2 through a physical sidelink control channel (physical sidelink control channel, PSCCH). The SCI includes various transmission parameters, for example, information such as a time-frequency domain resource position for SL-PRS transmission, and a modulation and coding manner (for example, a de-modulation reference signal (de-modulation reference signal, DMRS)). Correspondingly, the UE 2 may receive the SCI signal sent by the UE 1, measure reference signal received power (reference signal received power, RSRP) based on the DMRS in the SCI signal, and feed back the RSRP obtained through measurement to the UE 1.

The UE 1 may further send a sidelink positioning reference signal (sidelink positioning reference signal, SL-PRS) to the UE 2, and the UE 2 receives the SL-PRS sent by the UE 1, and determines a relative distance and a relative angle between the UE 1 and the UE 2, thereby implementing relative positioning between the UE 1 and the UE 2. If position information (for example, coordinates) of one of the UE 1 or the UE 2 is known, absolute positioning of the UE 1 and the UE 2 can be implemented.

A specific implementation of SL positioning is not limited in embodiments of this application.

Optionally, UEs may communicate with each other through a PC5 interface.

In a process of implementing SL positioning, to ensure that the UE 2 can receive the signal sent by the UE 1 and signal interference to another UE can be reduced as much as possible, power of the signal sent by the UE 1 needs to be controlled.

In view of this, this application provides a power control method and control apparatus, applied to the SL positioning technology, so that transmit power of the SL-PRS and the PSCCH can be controlled during implementation of SL positioning.

Before a power control solution for SL positioning is described, to facilitate understanding of the technical solutions of this application, related knowledge of SL positioning is first described. It may be understood that the descriptions are not intended to limit embodiments of this application.

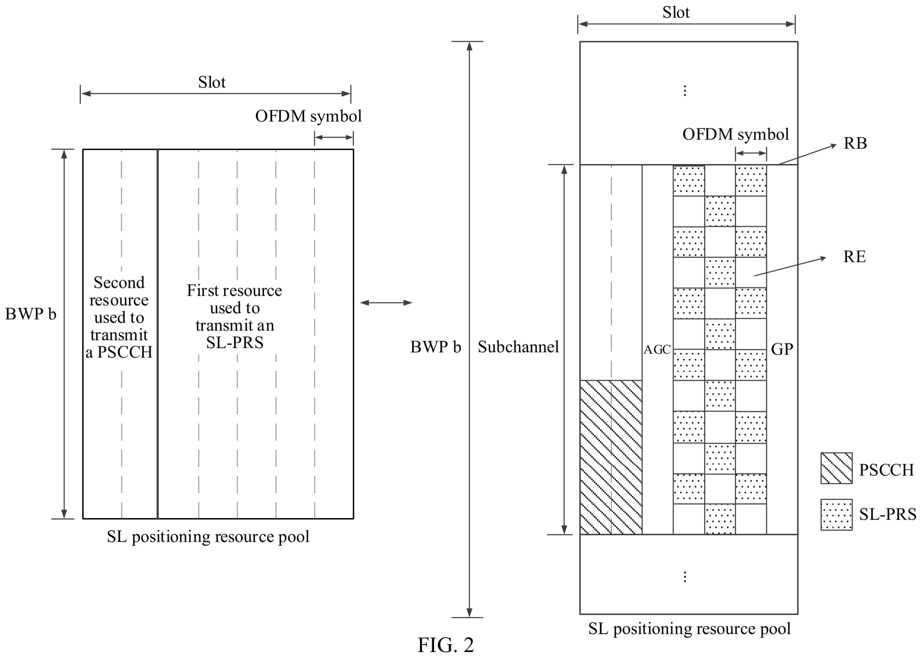

FIG. 2 is a diagram of a physical layer structure of an SL positioning resource pool according to an embodiment of this application. As shown in FIG. 2, this resource pool is exclusively used to transmit an SL-PRS and a PSCCH in SL positioning. A resource used to transmit the SL-PRS may be referred to as a first resource, a resource used to transmit the PSCCH may be referred to as a second resource, and the first resource and the second resource belong to the same resource pool.

Optionally, the physical layer structure may be a physical layer structure of a first terminal device in a bandwidth part (bandwidth part, BWP) of an SL.

The BWP is a set of a plurality of consecutive resource blocks (resource block, RB) in a bandwidth part of a carrier. For example, a BWP b in FIG. 2 may be understood as a b$^{th}$ BWP of a carrier f, and the BWP b includes a plurality of RBs.

The RB may also be referred to as a physical resource block (physical resource block, PRB). In frequency domain, the RB may be understood as a subchannel (subchannel), and one subchannel may be divided into a plurality of subcarriers (subcarrier). As shown in FIG. 2, one subchannel may be divided into 12 subcarriers. In time domain, the RBs occupy one slot (slot), and one slot may be divided into a plurality of orthogonal frequency division multiplexing (orthogonal frequency division multiplexing, OFDM) symbols (symbol). As shown in FIG. 2, one slot may be divided into seven OFDM symbols (each column represents one OFDM symbol), and the OFDM symbol is a frequency domain sequence.

One RB may include a plurality of resource elements (resource element, RE). The RE is a physical resource that is one subcarrier in frequency and that occupies one OFDM symbol in time domain.

In this embodiment, as shown in FIG. 2, an RB in the SL positioning resource pool is used as an example, the PSCCH and the SL-PRS separately occupy different OFDM symbols, and the SL-PRS uses a Comb comb structure. For example, if Comb = 1, each RE can be used to transmit an SL-PRS; or if Comb = 4, only REs at an interval of three REs on one OFDM symbol can be used to transmit an SL-PRS. For example, in FIG. 2, Comb = 2.

As shown in FIG. 2, if symbol-level power of the SL-PRS is different from that of the PSCCH, an automatic gain control (automatic gain control, AGC) symbol may be added, so that power switching time of a terminal device during SL-PRS transmission and PSCCH transmission can be increased; and a guard period (guard period, GP) is used to reserve time required for receiving/sending switching for the terminal device.

It should be noted that the physical layer structure shown in FIG. 2 is merely an example structure to which embodiments of this application are applicable, and is not intended to limit embodiments of this application. A power control solution provided in embodiments of this application may be further applied to another physical layer structure. For example, the power control solution may be applied to a physical layer structure in which partial time/frequency resources are divided from an existing SL communication resource pool to transmit an SL-PRS.

By using specific embodiments, the following describes in detail the technical solutions of this application and how to resolve the foregoing technical problem by using the technical solutions of this application. The following describes embodiments of this application with reference to the accompanying drawings. The following steps may be implemented in a software manner or a combination of hardware and software.

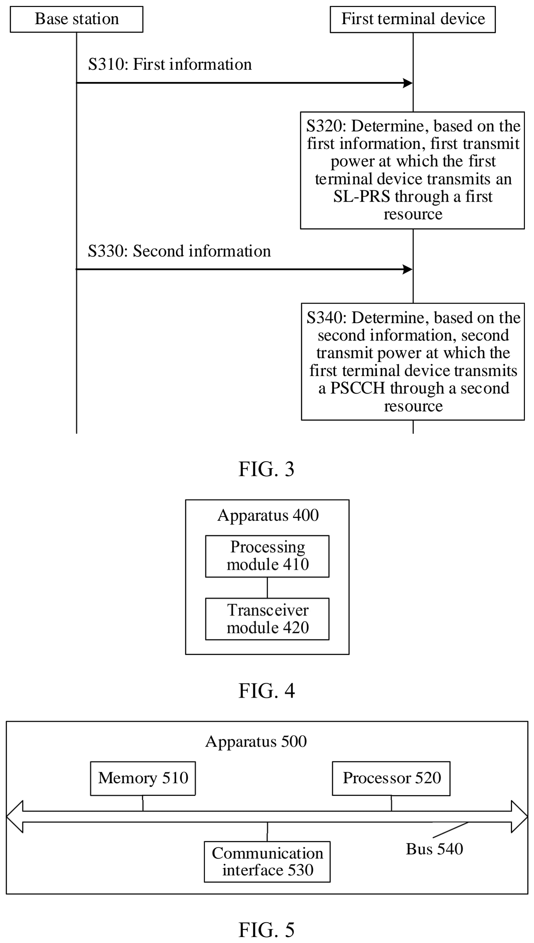

FIG. 3 is a diagram of a power control method according to an embodiment of this application. As shown in FIG. 3, the method includes S310 to S340.

The method may be performed by a first terminal device, or may be performed by a component (for example, a processor, a chip, or a chip system) of the first terminal device.

S310: Obtain first information, where the first information includes one or more of the following: a power control parameter of an SL-PRS, maximum transmit power of the first terminal device, a quantity of resource blocks RBs occupied by a first resource used to transmit the SL-PRS, DL pathloss reference signal configuration information, and SL reference signal received power.

The power control parameter of the SL-PRS may include at least one of the following: a parameter sl-MaxTx-Power-SLPRS indicating SL-PRS transmit power determined based on a channel busy ratio (channel busy ratio, CBR) and a transmission priority of the first resource in a resource pool; a parameter dl-P0-SLPRS indicating, based on DL power control, first receive power of an SL-PRS a receiving device expects to receive; a parameter dl-Alpha-SLPRS indicating, based on the DL power control, a first compensation factor of a first DL pathloss; a parameter sl-PO-SLPRS indicating, based on SL power control, second receive power of the SL-PRS the receiving device expects to receive; and a parameter sl-Alpha-SLPRS indicating, based on the SL power control, a second compensation factor of a first SL pathloss.

Optionally, the power control parameter of the SL-PRS may be configured by a network device (for example, a base station), and a specific configuration process is not limited in this application.

In an example, a value of the parameter sl-MaxTxPower-SLPRS may range from -30 to 33, and a unit may be decibel-milliwatt (dBm), milliwatt (mW), or watt (W). A value of the parameter dl-P0-SLPRS may range from -202 to 24, and a unit may be dBm, mW, or W. A value of the parameter dl-Alpha-SLPRS may range from 0 to 1. A value of the parameter sl-PO-SLPRS may range from -202 to 24, and a unit may be dBm, mW, or W. A value of the parameter sl-Alpha-SLPRS may range from 0 to 1.

Optionally, after configuring the power control parameter of the SL-PRS for the first terminal device, the network device (for example, the base station) may transmit the power control parameter of the SL-PRS to the first terminal device through a radio resource control (radio resource control, RRC) message.

In an example, the parameter sl-MaxTxPower-SLPRS may be added to a sidelink resource pool (SL-resourcepool) message in the RRC message, and the parameters dl-P0-SLPRS, dl-Alpha-SLPRS, sl-PO-SLPRS, and sl-Alpha-SLPRS may be added to a sidelink power control (SL-powercontrol) message in the RRC message.

The maximum transmit power of the first terminal device is determined by performance of the terminal device. The power may be configured in the network device (for example, the base station), or may be configured in the terminal device.

Optionally, if the power is configured in the network device (for example, the base station), the base station may send power information to the first terminal device; or if the power is configured in the terminal device, the terminal device may invoke the power information.

The first resource refers to a physical resource used to transmit an SL-PRS in an SL positioning resource pool.

In a possible implementation, the SL positioning resource pool and a physical layer structure in the resource pool may be pre-configured in advance, and related configuration information may be stored in the network device or the terminal device in advance.

Optionally, if the configuration information is stored in the network device (for example, the base station), the base station may send, to the terminal device, the quantity of resource blocks RBs occupied by the first resource used to transmit the SL-PRS; or if the configuration information is stored in the terminal device, the terminal device may invoke the configuration information.

In this embodiment, optionally, the DL pathloss reference signal configuration information may be configured by the network device (for example, the base station). This is not specifically limited in this application.

For example, the DL pathloss configuration information configured by the base station for the first terminal device may be information in a pathloss reference signal (pathloss reference signal) parameter package.

For example, the pathloss reference signal parameter package may include cell indexes of one or more network devices. The first terminal device may measure and select a DL pathloss reference signal based on the indexes, and may further determine a DL pathloss. The DL pathloss reference signal may be a downlink positioning reference signal (DL-PRS), or may be a synchronization signal/physical broadcast channel block (SS (synchronization signal)/PBCH Block, SSB). This is not limited in this application.

In this embodiment, optionally, a second terminal device may obtain the SL RSRP through measurement based on a DMRS in an SCI signal, and feed back the RSRP to the first terminal device. The RSRP fed back by the second terminal device is L1-RSRP, and the first terminal device may generate L3-RSRP after performing layer 3 filtering on the received L1-RSRP, so as to determine an SL pathloss. The SL pathloss is a difference between the reference signal transmit power and the L3 RSRP.

S320: Determine, based on the first information, first transmit power at which the first terminal device transmits the SL-PRS through the first resource.

For example, after the first information is obtained, a first power set may be determined based on the first information, and the first transmit power at which the first terminal device transmits the SL-PRS through the first resource is determined based on the first power set.

Optionally, the first power set includes at least one of the following power: the maximum transmit power of the first terminal device, the SL-PRS transmit power determined based on the channel busy ratio CBR and the transmission priority of the first resource in the resource pool, third transmit power, and fourth transmit power.

The SL-PRS transmit power determined based on the channel busy ratio CBR and the transmission priority of the first resource in the resource pool may be indicated by the power control parameter sl-MaxTxPower-SLPRS of the SL-PRS. If the parameter is not configured, the SL-PRS transmit power determined based on the channel busy ratio CBR and the transmission priority of the first resource in the resource pool may be equal to the maximum transmit power of the first terminal device.

The third transmit power is related to the first receive power of the SL-PRS the receiving device expects to receive, the quantity of first RBs used to transmit the SL-PRS, the first DL pathloss, and the first compensation factor of the first DL pathloss.

In this embodiment, the receiving device may be the second terminal device, and the first receive power may be indicated by the power control parameter dl-P0-SLPRS of the SL-PRS. If the parameter is not configured, the first receive power may be a smaller value between the maximum transmit power of the first terminal device and the SL-PRS transmit power determined based on the channel busy ratio CBR and the priority of the first resource in the resource pool. The quantity of first RBs is the quantity of RBs occupied by the first resource. The first DL pathloss is a DL pathloss determined by the first terminal device based on the DL pathloss reference signal configuration information configured by the network device (for example, the base station) for the SL-PRS. The first compensation factor may be indicated by the power control parameter dl-Alpha-SLPRS of the SL-PRS. If the parameter is not configured, the first compensation factor may be 1.

In an example, the third transmit power, the first receive power, the quantity of first RBs, the first DL pathloss, and the first compensation factor satisfy the following relation:

$$P_{PRS,D}(i) = P_{O_{PRS},D} + 10 \log_{10}\left(2^\mu * M_{RB}^{PRS}(i)\right) + \alpha_{PRS,D} * PL_{D1}$$

where $P_{PRS,D}(i)$ is the third transmit power, $P_{O_{PRS},D}$ is the first receive power, $\mu$ is a constant coefficient, $M_{RB}^{PRS}(i)$ is the quantity of first RBs, $\alpha_{PRS,D}$ is the first compensation factor, and $PL_{D1}$ is the first DL pathloss.

The fourth transmit power is related to the second receive power of the SL-PRS expected to be received by the receiving device, the quantity of the first RBs, the first SL pathloss, and the second compensation factor of the first SL pathloss.

The second receive power may be indicated by the power control parameter sl-P0-SLPRS of the SL-PRS. If the parameter is not configured, the second receive power may be a smaller value between the maximum transmit power of the first terminal device and the SL-PRS transmit power determined based on the channel busy ratio CBR and the priority of the first resource in the resource pool. The first SL pathloss is an SL pathloss determined by the first terminal device based on the L3 RSRP that is generated based on the L1 RSRP fed back by the second terminal device, and the first SL pathloss is the difference between SL-PRS reference transmit power and the L3 RSRP. The second compensation factor may be indicated by the power control parameter sl-Alpha-SLPRS of the SL-PRS. If the parameter is not configured, the second compensation factor may be 1.

In an example, the fourth transmit power, the second receive power, the quantity of first RBs, the first SL pathloss, and the second compensation factor satisfy the following relation:

$$P_{PRS,SL}(i) = P_{O_{PRS},SL} + 10 \log_{10}\left(2^\mu * M_{RB}^{PRS}(i)\right) + \alpha_{PRS,SL} * PL_{SL1}$$

where $P_{PRS,SL}(i)$ is the fourth transmit power, $P_{O_{PRS},SL}$ is the second receive power, $\mu$ is a constant coefficient, $M_{RB}^{PRS}(i)$ is the quantity of first RBs, $\alpha_{PRS,SL}$ is the second compensation factor, and $PL_{SL1}$ is the first SL pathloss.

In this embodiment, after the first power set is determined based on the first information, the first transmit power at which the first terminal device transmits the SL-PRS through the first resource can be determined based on the first power set. The first transmit power may be a smallest value in the first power set. The first transmit power may also be understood as power, at a sending occasion i, of the SL BWP b on the carrier f and used to transmit the SL-PRS.

In an example, the first transmit power may be determined in the following manner:

$$P_{PRS}(i) = \min(P_{CMAX}, P_{MAX,CBR1}, \min(P_{PRS,D}(i), P_{PRS,SL}(i)))$$

or

$$P_{PRS}(i) = \min(P_{CMAX}, P_{MAX,CBR1}, P_{PRS,D}(i), P_{PRS,SL}(i))$$

where $P_{PRS}(i)$ is the first transmit power, $P_{CMAX}$ is the maximum transmit power of the first terminal device, $P_{MAX,CBR1}$ is the SL-PRS transmit power determined based on the channel busy ratio CBR and the priority of the first resource in the resource pool, $P_{PRS,D}$ is the third transmit power, and $P_{PRS,SL}$ is the fourth transmit power.

The first transmit power and all power in the first power set are all absolute values of the power in a unit of dBm.

It should be understood that, if information included in the first information is different, power included in the first power set is different, and the first transmit power is also different. The information included in the first information is not specifically limited in embodiments of this application.

In an example, if the first information includes only the maximum transmit power of the first terminal device, correspondingly, the first power set includes only the maximum transmit power of the first terminal device and the SL-PRS transmit power determined based on the channel busy ratio CBR and the priority of the first resource in the resource pool. In this case, the first transmit power is the maximum transmit power of the first terminal device.

In an example, if the first information includes only the power control parameter of the SL-PRS, correspondingly, the first power set includes only the SL-PRS transmit power determined based on the channel busy ratio CBR and the transmission priority of the first resource in the resource pool. In this case, the first transmit power is the SL-PRS transmit power determined based on the channel busy ratio CBR and the transmission priority of the first resource in the resource pool.

In an example, if the first information includes the maximum transmit power of the first terminal device, the quantity of first RBs, and the DL pathloss reference signal configuration information, correspondingly, the first power set includes the maximum transmit power of the first terminal device, the SL-PRS transmit power determined based on the channel busy ratio CBR and the transmission priority of the first resource in the resource pool, and the third transmit power. In this case, the first transmit power is the smallest value in the first power set.

In an example, if the first information includes the maximum transmit power of the first terminal device, the quantity of first RBs used to transmit the SL-PRS, and the SL reference signal received power, correspondingly, the first power set includes the maximum transmit power of the first terminal device, the SL-PRS transmit power determined based on the channel busy ratio CBR and the transmission priority of the first resource in the resource pool, and the fourth transmit power. In this case, the first transmit power is the smallest value in the first power set.

In an example, if the first information includes the power control parameter of the SL-PRS, the quantity of first RBs, and the DL pathloss reference signal configuration information, correspondingly, the first power set includes the SL-PRS transmit power determined based on the channel busy ratio CBR and the transmission priority of the first resource in the resource pool and the third transmit power. In this case, the first transmit power is the smaller value in the first power set.

In this embodiment, S310 and S320 provide a power control method for SL-PRS transmission in an SL positioning technology, and the method may be used to determine the SL-PRS transmit power.

S330: Obtain second information, where the second information includes one or more of the following: a power control parameter of a PSCCH, the maximum transmit power of the first terminal device, a quantity of RBs occupied by a second resource used to transmit the PSCCH, the DL pathloss reference signal configuration information, and the SL reference signal received power, where the first resource and the second resource belong to a same resource pool.

The power control parameter of the PSCCH includes at least one of the following: a parameter sl-MaxTxPower-RS indicating PSCCH transmit power determined based on a CBR and a transmission priority of the second resource in the resource pool; a parameter dl-PO-RS indicating, based on the DL power control, third receive power of a PSCCH the receiving device expects to receive; a parameter dl-Alpha-RS indicating, based on the DL power control, a third compensation factor of a second DL pathloss; a parameter sl-PO-RS indicating, based on the SL power control, fourth receive power of the PSCCH the receiving device expects to receive; and a parameter sl-Alpha-RS indicating, based on the SL power control, a fourth compensation factor of a second SL pathloss.

Optionally, the power control parameter of the PSCCH may be configured by the network device (for example, the base station), and a specific configuration process is not limited in this application.

In an example, a value of the parameter sl-MaxTxPower-RS may range from -30 to 33, and a unit may be dBm, mW, or W. A value of the parameter dl-PO-RS may range from -202 to 24, and a unit may be dBm, mW, or W. A value of the parameter dl-Alpha-RS may range from 0 to 1. A value of the parameter sl-PO-RS may range from -202 to 24, and a unit may be dBm, mW, or W. A value of the parameter sl-Alpha-RS may range from 0 to 1.

Optionally, after configuring the power control parameter of the SL-PRS for the first terminal device, the network device (for example, the base station) may transmit the power control parameter of the SL-PRS to the first terminal device through a radio resource control (radio resource control, RRC) message.

In an example, the parameter sl-MaxTxPower-RS may be added to a sidelink resource pool (SL-resourcepool) message in the RRC message, and the parameters dl-PO-RS, dl-Alpha-RS, sl-PO-RS, and sl-Alpha-RS may be added to a sidelink power control (SL-powercontrol) message in the RRC message.

The second resource refers to a physical resource used to transmit a PSCCH in the SL positioning resource pool, where the first resource and the second resource belong to the same resource pool.

For related descriptions of the maximum transmit power of the first terminal device, the DL pathloss reference signal configuration information, and the SL reference signal received power, refer to S310. Details are not described herein again.

S340: Determine, based on the second information, second transmit power at which the first terminal device transmits the PSCCH through the second resource.

For example, after the second information is obtained, a second power set may be determined based on the second information, and the second transmit power at which the first terminal device transmits the PSCCH through the second resource is determined based on the second power set.

Optionally, the second power set includes at least one of the following power: the maximum transmit power of the first terminal device, the PSCCH transmit power determined based on the channel busy ratio CBR and the transmission priority of the second resource in the resource pool, fifth transmit power, and sixth transmit power.

The PSCCH transmit power determined based on the channel busy ratio CBR and the transmission priority of the second resource in the resource pool may be indicated by the power control parameter sl-MaxTxPower-RS of the PSCCH. If the parameter is not configured, the PSCCH transmit power determined based on the channel busy ratio CBR and the transmission priority of the second resource in the resource pool may be equal to the maximum transmit power of the first terminal device.

The fifth transmit power is related to the third receive power of the PSCCH the receiving device expects to receive, the quantity of second RBs used to transmit the PSCCH, the second DL pathloss, and the third compensation factor of the second DL pathloss.

In this embodiment, the receiving device may be the second terminal device, and the third receive power may be indicated by the power control parameter dl-PO-RS of the PSCCH. If the parameter is not configured, the third receive power may be a smaller value between the maximum transmit power of the first terminal device and the transmit power determined based on the channel busy ratio CBR and the priority of the second resource in the resource pool. The quantity of second RBs is the quantity of RBs occupied by the second resource. The second DL pathloss is a DL pathloss determined by the first terminal device based on the DL pathloss reference signal configuration information configured by the network device (for example, the base station) for the PSCCH. The third compensation factor may be indicated by the power control parameter dl-Alpha-RS of the PSCCH. If the parameter is not configured, the first compensation factor may be 1.

Optionally, if the DL pathloss reference signal configuration information configured by the network device (for example, the base station) for the SL-PRS and the DL pathloss reference signal configuration information configured by the network device for the PSCCH are consistent, the first DL pathloss is the same as the second DL pathloss. If the DL pathloss reference signal configuration information configured by the network device (for example, the base station) for the SL-PRS and the DL pathloss reference signal configuration information configured by the network device for the PSCCH are inconsistent, considering that channel transmission environments of the SL-PRS and the PSCCH are consistent, the first DL pathloss and the second DL pathloss can also be considered to be the same.

In an example, the fifth transmit power, the third receive power, the quantity of second RBs, the second DL pathloss, and the third compensation factor may satisfy the following relation:

$$P_{PSCCH,D}(i) = P_{O_{PSCCH},D} + 10\log_{10}\left(2^{\mu} * M_{RB}^{PSCCH}(i)\right) + \alpha_{PSCCH,D} * PL_{D2}$$

where $P_{PSCCH,D}(i)$ is the fifth transmit power, $P_{O_{PSCCH},D}$ is the third receive power, $\mu$ is a constant coefficient, $M_{RB}^{PSCCH}(i)$

is the quantity of second RBs, $\alpha_{PSCCH,D}$ is the third compensation factor, and $PL_{D2}$ is the second DL pathloss.

The sixth transmit power is related to the fourth receive power of the PSCCH the receiving device expects to receive, the quantity of second RBs, the second SL pathloss, and the fourth compensation factor of the second SL pathloss.

The fourth receive power may be indicated by the power control parameter sl-PO-RS of the PSCCH. If the parameter is not configured, the fourth receive power may be a smaller value between the maximum transmit power of the first terminal device and the PSCCH transmit power determined based on the channel busy ratio CBR and the priority of the second resource in the resource pool. The second SL pathloss is an SL pathloss determined by the first terminal device based on the L3 RSRP that is generated based on the L1 RSRP fed back by the second terminal device, and the second SL pathloss is a difference between PSCCH reference transmit power and the L3 RSRP. The fourth compensation factor may be indicated by the power control parameter sl-Alpha-RS of the PSCCH. If the parameter is not configured, the fourth compensation factor may be 1.

Optionally, considering that the channel transmission environments of the SL-PRS and the PSCCH are consistent, the first SL pathloss and the second SL pathloss may be considered to be the same.

In an example, the sixth transmit power, the fourth receive power, the quantity of second RBs, the second SL pathloss, and the fourth compensation factor may satisfy the following relation:

$$P_{PSCCH,SL}(i) = P_{O_{PSCCH},SL} + 10 \log_{10}\left(2^{\mu} * M_{RB}^{PSCCH}(i)\right) + \alpha_{PSCCH,SL} * PL_{SL2}$$

where $P_{PSCCH,SL}(i)$ is the sixth transmit power, $P_{O_{PSCCH},SL}$ is the fourth receive power, $\mu$ is a constant coefficient, $M_{RB}^{PSCCH}(i)$ is the quantity of second RBs, $\alpha_{PSCCH,SL}$ is the fourth compensation factor, and $PL_{SL2}$ is the second SL pathloss.

In this embodiment, after the second power set is determined based on the second information, the second transmit power at which the first terminal device transmits the PSCCH through the second resource can be determined based on the second power set. The second transmit power may be a smallest value in the second power set. The second transmit power may also be understood as power, at the sending occasion i, of the SL BWP b on the carrier f and used to transmit the PSCCH.

In an example, the second transmit power may be determined in the following manner:

$$P_{PSCCH}(i) = \min(P_{CMAX}, P_{MAX,CBR2}, \min(P_{PSCCH,D}(i), P_{PSCCH,SL}(i)))$$

or

$$P_{PSCCH}(i) = \min(P_{CMAX}, P_{MAX,CBR2}, P_{PSCCH,D}(i), P_{PSCCH,SL}(i))$$

$P_{PSCCH}(i)$ is the second transmit power, $P_{CMAX}$ is the maximum transmit power of the first terminal device, $P_{MAX,CBR2}$ is the PSCCH transmit power determined based on the channel busy ratio CBR and the priority of the second resource in the resource pool, $P_{PSCCH,D}$ is the fifth transmit power, and $P_{PSCCH,SL}$ is the sixth transmit power.

The second transmit power and all power in the second power set are all absolute values of the power in a unit of dBm.

It should be understood that, if information included in the second information is different, power included in the second power set is different, and the second transmit power is also different. The information included in the second information is not specifically limited in embodiments of this application.

For a related example in which the second transmit power is different because the information included in the second information is different, refer to S320. Details are not described herein again.

In this embodiment, S330 and S340 provide a power control method for PSCCH transmission in the SL positioning technology, and the method may be used to determine the PSCCH transmit power.

In this embodiment of this application, respective sets of independent power control parameters are configured for the SL-PRS and the PSCCH, so that the first terminal device can separately determine the SL-PRS transmit power and the PSCCH transmit power based on the configured power control parameters, thereby implementing power control in the SL positioning technology.

Further, based on the foregoing embodiment, in order to ensure even power allocation in the SL positioning resource pool and reliability of an SL positioning result, configuration of power control parameters of the SL-PRS and the PSCCH needs to be described.

In actual application, the even power allocation in the SL positioning resource pool involves three dimensions: the SL-PRS and the PSCCH have same symbol-level power, the SL-PRS and the PSCCH have same RB-level power, and the SL-PRS and the PSCCH have same RE-level power.

That the SL-PRS and the PSCCH have the same symbol-level power may be understood as follows: The SL-PRS and the PSCCH have same transmit power on one symbol in one BWP.

That the SL-PRS and the PSCCH have the same RB-level power may be understood as follows: The SL-PRS and the PSCCH have same transmit power on one symbol in one RB. That the SL-PRS and the PSCCH have the same RB-level power may also be understood as follows: The SL-PRS and the PSCCH have same power spectral density (power spectral density, PSD).

That the SL-PRS and the PSCCH have the same RE-level power may be understood as follows: REs used to transmit the SL-PRS and the PSCCH have same transmit power. That the SL-PRS and the PSCCH have the same RE-level power may also be referred to as follows: The SL-PRS and the PSCCH have a same energy per resource element (energy per resource element, EPRE).

In a possible implementation, when the SL-PRS and the PSCCH have the same symbol-level power, the third receive power is related to the first receive power, the quantity of first RBs, the quantity of second RBs, and the transmission comb value of the SL-PRS, and the first compensation factor is the same as the third compensation factor; and/or the fourth receive power is related to the second receive power, the quantity of first RBs, the quantity of second RBs, and the transmission comb value of the SL-PRS, and the second compensation factor is the same as the fourth compensation factor.

The transmission comb value of the SL-PRS is a Comb value of a Comb comb structure used by the SL-PRS. For example, the transmission comb value of the SL-PRS in FIG. 2 is 2.

In this implementation, that the third receive power is related to the first receive power, the quantity of first RBs, the quantity of second RBs, and the transmission comb value of the SL-PRS may be understood as follows: The value of the parameter dl-PO-RS indicating the third receive power is related to the value of the parameter dl-P0-SLPRS indicating the first receive power, the quantity of first RBs, the quantity of second RBs, and the transmission comb value of the SL-PRS. That the first compensation factor is the same as the third compensation factor may be understood as follows: The value of the parameter dl-Alpha-SLPRS indicating the first compensation factor is the same as the value of the parameter dl-Alpha-RS indicating the third compensation factor.

In an example, the third receive power, the first receive power, the quantity of first RBs, the quantity of second RBs, and the transmission comb value of the SL-PRS may satisfy the following relation:

$$P_{O_{PRS},D} + 10\log_{10}(\frac{M_{RB}^{PRS}(i)}{Comb * M_{RB}^{PSCCH}(i)}) = P_{O_{PSCCH},D}$$

where $P_{O_{PRS},D}$ is the first receive power, Comb is the transmission comb value of the SL-PRS, $M_{RB}^{PRS}(i)$ is the quantity of first RBs, $M_{RB}^{PSCCH}(i)$ is the quantity of second RBs, and $P_{O_{PSCCH},D}$ is the third receive power.

Correspondingly, that the fourth receive power is related to the second receive power, the quantity of first RBs, the quantity of second RBs, and the transmission comb value of the SL-PRS may be understood as follows: The value of the parameter sl-PO-RS indicating the fourth receive power is related to the value of the parameter sl-PO-SLPRS indicating the second receive power, the quantity of first RBs, the quantity of second RBs, and the transmission comb value of the SL-PRS. That the second compensation factor is the same as the fourth compensation factor may be understood as follows: The value of the parameter sl-Alpha-SLPRS indicating the second compensation factor is the same as the value of the parameter sl-Alpha-RS indicating the fourth compensation factor.

In an example, the fourth receive power, the second receive power, the quantity of first RBs, the quantity of second RBs, and the transmission comb value of the SL-PRS may satisfy the following relation:

$$P_{O_{PRS},SL} + 10\log_{10}(\frac{M_{RB}^{PRS}(i)}{Comb * M_{RB}^{PSCCH}(i)}) = P_{O_{PSCCH},SL}$$

where $P_{O_{PRS},SL}$ is the second receive power, Comb is the transmission comb value of the SL-PRS, $M_{RB}^{PRS}(i)$ is the quantity of first RBs, $M_{RB}^{PSCCH}(i)$ is the quantity of second RBs, and $P_{O_{PSCCH},SL}$ is the fourth receive power.

In this implementation, the SL-PRS and the PSCCH have the same symbol-level power, so that the terminal device does not need additional power switching time during SL-PRS transmission and PSCCH transmission, thereby reducing difficulty in implementing the power control solution for SL positioning; and no additional AGC symbol needs to be set in the resource pool, thereby improving utilization of the resource pool.

In a possible implementation, when the SL-PRS and the PSCCH have the same RB-level power, the first receive power is the same as the third receive power, and the first compensation factor is the same as the third compensation factor; and/or the second receive power is the same as the fourth receive power, and the second compensation factor is the same as the fourth compensation factor.

In this implementation, that the first receive power is the same as the third receive power may be understood as follows: The value of the parameter dl-P0-SLPRS indicating the first receive power is the same as the value of the parameter dl-PO-RS indicating the third receive power; and that the first compensation factor is the same as the third compensation factor may be understood as follows: The value of the parameter dl-Alpha-SLPRS indicating the first compensation factor is the same as the value of the parameter dl-Alpha-RS indicating the third compensation factor.

Correspondingly, that the second receive power is the same as the fourth receive power may be understood as follows: The value of the parameter sl-PO-SLPRS indicating the second receive power is the same as the value of the parameter sl-PO-RS indicating the fourth receive power; and that the second compensation factor is the same as the fourth compensation factor may be understood as follows: The value of the parameter sl-Alpha-SLPRS indicating the second compensation factor is the same as the value of the parameter sl-Alpha-RS indicating the fourth compensation factor.

In this implementation, the SL-PRS and the PSCCH have the same RB-level power, so that all power control solutions of an SL technology (for example, the SL positioning technology or an SL communication technology) are power control solutions with same PSD, thereby ensuring consistency of power control implementation in the SL technology. In addition, in both processes of implementing SL positioning and SL communication, after receiving a signal sent by the first terminal device, the second terminal device needs to demodulate the received signal, and a demodulation process needs to be implemented in the RB. Therefore, in this implementation, in the process of implementing SL positioning, the terminal device can further use a signal demodulation solution that is the same as that in existing SL communication, and a signal demodulation solution used for SL positioning does not need to be reconfigured for the terminal device. This simplifies an implementation process of the power control solution for SL positioning, and saves resources.

In a possible implementation, when the SL-PRS and the PSCCH have the same EPRE, the third receive power is related to the first receive power and the transmission comb value of the SL-PRS, and the first compensation factor is the same as the third compensation factor; and/or the fourth receive power is related to the second receive power and the transmission comb value of the SL-PRS, and the second compensation factor is the same as the fourth compensation factor.

In this implementation, that the third receive power is related to the first receive power and the transmission comb value of the SL-PRS may be understood as follows: The value of the parameter dl-PO-RS indicating the third receive power is related to the value of the parameter dl-PO-SLPRS indicating the first receive power and the transmission comb value of the SL-PRS; and that the first compensation factor is the same as the third compensation factor may be understood as follows: The value of the parameter dl-Alpha-SLPRS indicating the first compensation factor is the same as the value of the parameter dl-Alpha-RS indicating the third compensation factor.

In an example, the third receive power, the first receive power, and the transmission comb value of the SL-PRS may satisfy the following relation:

$$P_{O_{PRS},D} + 10\log_{10}(\text{Comb}) = P_{O_{PSCCH},D}$$

where $P_{O_{PRS},D}$ is the first receive power, Comb is the transmission comb value of the SL-PRS, and $P_{O_{PSCCH},D}$ is the third receive power.

Correspondingly, that the fourth receive power is related to the second receive power and the transmission comb value of the SL-PRS may be understood as follows: The value of the parameter sl-PO-RS indicating the fourth receive power is related to the value of the parameter sl-PO-SLPRS indicating the second receive power and the transmission comb value of the SL-PRS; and that the second compensation factor is the same as the fourth compensation factor may be understood as follows: The value of the parameter sl-Alpha-SLPRS indicating the second compensation factor is the same as the value of the parameter sl-Alpha-RS indicating the fourth compensation factor.

In an example, the fourth receive power, the second receive power, and the transmission comb value of the SL-PRS may satisfy the following relation:

$$P_{O_{PRS},SL} + 10\log_{10}(\text{Comb}) = P_{O_{PSCCH},SL}$$

where $P_{O_{PRS},SL}$ is the second receive power, Comb is the transmission comb value of the SL-PRS, and $P_{O_{PSCCH},SL}$ is the fourth receive power.

In this implementation, the SL-PRS and the PSCCH have the same EPRE, so that when the second terminal device detects information sent by the first terminal device, a resource detection manner same as that of the existing SL communication can be used. This simplifies the implementation process of the power control solution for SL positioning, and saves resources.

FIG. 4 is a diagram of a structure of a power control apparatus according to an embodiment of this application. The apparatus 400 shown in FIG. 4 may be configured to implement various steps performed by the base station or the first terminal device in FIG. 3. As shown in FIG. 4, the apparatus 400 in this embodiment may include: a processing module 410 and a transceiver module 420.

When the apparatus 400 is configured to implement the method shown in FIG. 3, the processing module 410 may be configured to implement the operations performed by the first terminal device in S320 and S340; the transceiver module 420 may be configured to implement the operations performed by the first terminal device in S310 and S330; and the transceiver module is further configured to implement the operations performed by the base station in S310 and S330.

It should be understood that the apparatus 400 is embodied in a form of a functional module. The term "module" may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 400 may be specifically the first terminal device or the base station in the foregoing method embodiments, or functions of the first terminal device or the base station in the foregoing method embodiments may be integrated into the apparatus 400. The apparatus 400 may be configured to perform procedures and/or steps corresponding to the first terminal device or the base station in the foregoing method embodiments. To avoid repetition, details are not described herein again.

FIG. 5 is a diagram of a structure of a power control apparatus according to another embodiment of this application. As shown in FIG. 5, the apparatus 500 is configured to implement the method performed by the first terminal device or the base station in any one of the foregoing embodiments.

As shown in FIG. 5, the apparatus 500 in this embodiment includes: a memory 510, a processor 520, a communication interface 530, and a bus 540. The memory 510, the processor 520, and the communication interface 530 are communicatively connected to each other through the bus 540.

The memory 510 may be a read-only memory (read-only memory, ROM), a static storage device, a dynamic storage device, or a random access memory (random access memory, RAM). The memory 510 may store a program. When the program stored in the memory 510 is executed by the processor 520, the processor 520 is configured to perform various steps performed by the first terminal device or the base station in FIG. 3.

The processor 520 may be a general-purpose central processing unit (central processing unit, CPU), a microprocessor, an application-specific integrated circuit (application-specific integrated circuit, ASIC), or one or more integrated circuits, and is configured to execute a related program.

Alternatively, the processor 520 may be an integrated circuit chip and has a signal processing capability. In an implementation process, various related steps in embodiments of this application may be completed by using a hardware integrated logic circuit or instructions in a form of software in the processor 520.

Alternatively, the foregoing processor 520 may be a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. The processor 520 may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 510. The processor 520 reads information in the memory 510, and completes, in combination with hardware of the processor 520, functions that need to be performed by units included in the apparatus in this application.

The communication interface 530 may use a transceiver apparatus, for example, but not limited to, a transceiver, to implement communication between the apparatus 500 and another device or apparatus.

The bus 540 may include a path for transferring information between components (for example, the memory 510, the processor 520, and the communication interface 530) of the apparatus 500.

Some embodiments of this application further provide a computer program product. For example, when SL-PRS transmit power and PSCCH transmit power are determined, and when the computer program product runs on a processor, the method implemented by the terminal device or the base station in any one of the foregoing embodiments may be implemented. Some embodiments of this application further provide a computer-readable storage medium. The computer-readable storage medium includes computer instructions. When the computer instructions are run on a processor, the method implemented by the first terminal device or the base station in any one of the foregoing embodiments may be implemented.

It should be noted that the modules or components shown in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form in which a processing element invokes a program code, the processing element may be a general-purpose processor, for example, a central processing unit (central processing unit, CPU) or another processor that can invoke the program code, for example, a controller. For another example, the modules may be integrated together and implemented in a form of a system-on-a-chip (system-on-a-chip, SoC).

All or some of the foregoing embodiments may be implemented by software, hardware, firmware, software modules, or any combination thereof. When the software is used to implement embodiments, all or a part of embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The term "a plurality of" in this specification refers to two or more. The term "and/or" in this specification describes only an association relationship for describing associated objects and indicates that three relationships may exist. For example, A and/or B may indicate the following three cases: Only A exists, both A and B exist, and only B exists. In addition, the character "/" in this specification usually indicates an "or" relationship between the associated objects, and the character "/" in a formula indicates a "division" relationship between the associated objects. In addition, it should be understood that in the description of this application, terms such as "first" and "second" are merely used for distinguishing and description, but should not be understood as indicating or implying relative importance, or should not be understood as indicating or implying a sequence.

It may be understood that various numbers in embodiments of this application are merely used for distinguishing for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

**Claims**

1. A power control method, wherein the method is applied to a terminal device, and the method comprises:

   obtaining first information, wherein the first information comprises one or more of the following: a power control parameter of a sidelink positioning reference signal SL-PRS, maximum transmit power of the terminal device, a quantity of resource blocks RBs occupied by a first resource used to transmit the SL-PRS, downlink DL pathloss reference signal configuration information, and SL reference signal received power;
   determining, based on the first information, first transmit power at which the terminal device transmits the SL-PRS through the first resource;
   obtaining second information, wherein the second information comprises one or more of the following: a power control parameter of a physical sidelink control channel PSCCH, the maximum transmit power of the terminal device, a quantity of RBs occupied by a second resource used to transmit the PSCCH, the DL pathloss reference signal configuration information, and the SL reference signal received power, wherein the first resource and the second resource belong to a same resource pool; and
   determining, based on the second information, second transmit power at which the terminal device transmits the PSCCH through the second resource.

2. The method according to claim 1, wherein the first transmit power is a smallest value in a first power set, and the first power set comprises at least one of the following power: the maximum transmit power of the terminal device, transmit power determined based on a channel busy ratio and a transmission priority of the first resource in the resource pool, third transmit power, and fourth transmit power; the third transmit power is related to first receive power of an SL-PRS a receiving device expects to receive, a quantity of first RBs, a first DL pathloss, and a first compensation factor of the first DL pathloss; the fourth transmit power is related to second receive power of the SL-PRS the receiving device expects to receive, the quantity of first RBs, a first SL pathloss, and a second compensation factor of the first SL pathloss; and the quantity of first RBs is the quantity of RBs occupied by the first resource.

3. The method according to claim 2, wherein the second transmit power is a smallest value in a second power set, and the second power set comprises at least one of the following power: the maximum transmit power of the terminal device, transmit power determined based on a channel busy ratio and a transmission priority of the second resource in the resource pool, fifth transmit power, and sixth transmit power; the fifth transmit power is related to third receive power of a PSCCH the receiving device expects to receive, a quantity of second RBs, a second DL pathloss, and a third compensation factor of the second DL pathloss; the sixth transmit power is related to fourth receive power of the PSCCH the receiving device expects to receive, the quantity of second RBs, a second SL pathloss, and a fourth compensation factor of the second SL pathloss; and the quantity of second RBs is the quantity of RBs occupied by the second resource.

4. The method according to claim 3, wherein the first receive power is the same as the third receive power, and the first compensation factor is the same as the third compensation factor; and/or
the second receive power is the same as the fourth receive power, and the second compensation factor is the same as the fourth compensation factor.

5. The method according to claim 3, wherein the third receive power is related to the first receive power and a transmission comb value of the SL-PRS, and the first compensation factor is the same as the third compensation factor; and/or
the fourth receive power is related to the second receive power and the transmission comb value of the SL-PRS, and the second compensation factor is the same as the fourth compensation factor.

6. The method according to claim 5, wherein the third receive power, the first receive power, and the transmission comb value of the SL-PRS satisfy the following relation:

$$P_{O_{PRS},D} + 10\log_{10}(Comb) = P_{O_{PSCCH},D}$$

wherein $P_{O_{PRS},D}$ is the first receive power, Comb is the transmission comb value of the SL-PRS, and $P_{O_{PSCCH},D}$ is the third receive power.

7. The method according to claim 5 or 6, wherein the fourth receive power, the second receive power, and the transmission comb value of the SL-PRS satisfy the following relation:

$$P_{O_{PRS},SL} + 10\log_{10}(Comb) = P_{O_{PSCCH},SL}$$

wherein $P_{O_{PRS},SL}$ is the second receive power, Comb is the transmission comb value of the SL-PRS, and $P_{O_{PSCCH},SL}$ is the fourth receive power.

8. The method according to claim 3, wherein the third receive power is related to the first receive power, the quantity of first RBs, the quantity of second RBs, and a transmission comb value of the SL-PRS, and the first compensation factor is the same as the third compensation factor; and/or
the fourth receive power is related to the second receive power, the quantity of first RBs, the quantity of second RBs, and the transmission comb value of the SL-PRS, and the second compensation factor is the same as the fourth compensation factor.

9. The method according to claim 8, wherein the third receive power, the first receive power, the quantity of first RBs, the quantity of second RBs, and the transmission comb value of the SL-PRS satisfy the following relation:

$$P_{O_{PRS},D} + 10\log_{10}\left(\frac{M_{RB}^{PRS}(i)}{Comb * M_{RB}^{PSCCH}(i)}\right) = P_{O_{PSCCH},D}$$

wherein $P_{O_{PRS},D}$ is the first receive power, Comb is the transmission comb value of the SL-PRS, $M_{RB}^{PRS}(i)$ is the quantity of first RBs, $M_{RB}^{PSCCH}(i)$ is the quantity of second RBs, and $P_{O_{PSCCH},D}$ is the third receive power.

10. The method according to claim 8 or 9, wherein the fourth receive power, the second receive power, the quantity of first RBs, the quantity of second RBs, and the transmission comb value of the SL-PRS satisfy the following relation:

$$P_{O_{PRS},SL} + 10\log_{10}\left(\frac{M_{RB}^{PRS}(i)}{Comb * M_{RB}^{PSCCH}(i)}\right) = P_{O_{PSCCH},SL}$$

wherein $P_{O_{PRS},SL}$ is the second receive power, Comb is the transmission comb value of the SL-PRS, $M_{RB}^{PRS}(i)$ is the quantity of first RBs, $M_{RB}^{PSCCH}(i)$ is the quantity of second RBs, and $P_{O_{PSCCH},SL}$ is the fourth receive power.

11. The method according to any one of claims 3 to 10, wherein the third transmit power, the first receive power, the quantity of first RBs, the first DL pathloss, and the first compensation factor satisfy the following relation:

$$P_{PRS,D}(i) = P_{O_{PRS},D} + 10\log_{10}\left(2^\mu * M_{RB}^{PRS}(i)\right) + \alpha_{PRS,D} * PL_{D1}$$

wherein $P_{PRS,D}(i)$ is the third transmit power, $P_{O_{PRS},D}$ is the first receive power, $\mu$ is a constant coefficient, $M_{RB}^{PRS}(i)$ is the quantity of first RBs, $\alpha_{PRS,D}$ is the first compensation factor, and $PL_{D1}$ is the first DL pathloss.

12. The method according to claim 11, wherein the fourth transmit power, the second receive power, the quantity of first RBs, the first SL pathloss, and the second compensation factor satisfy the following relation:

$$P_{PRS,SL}(i) = P_{O_{PRS},SL} + 10\log_{10}\left(2^\mu * M_{RB}^{PRS}(i)\right) + \alpha_{PRS,SL} * PL_{SL1}$$

wherein $P_{PRS,SL}(i)$ is the fourth transmit power, $P_{O_{PRS},SL}$ is the second receive power, $\mu$ is a constant coefficient, $M_{RB}^{PRS}(i)$ is the quantity of first RBs, $\alpha_{PRS,SL}$ is the second compensation factor, and $PL_{SL1}$ is the first SL pathloss.

13. The method according to any one of claims 3 to 12, wherein the fifth transmit power, the third receive power, the quantity of second RBs, the second DL pathloss, and the third compensation factor satisfy the following relation:

$$P_{PSCCH,D}(i) = P_{O_{PSCCH},D} + 10\log_{10}\left(2^\mu * M_{RB}^{PSCCH}(i)\right) + \alpha_{PSCCH,D} * PL_{D2}$$

wherein $P_{PSCCH,D}(i)$ is the fifth transmit power, $P_{O_{PSCCH},D}$ is the third receive power, $\mu$ is a constant coefficient, $M_{RB}^{PSCCH}(i)$ is the quantity of second RBs, $\alpha_{PSCCH,D}$ is the third compensation factor, and $PL_{D2}$ is the second DL pathloss.

14. The method according to claim 13, wherein the sixth transmit power, the fourth receive power, the quantity of second RBs, the second SL pathloss, and the fourth compensation factor satisfy the following relation:

$$P_{PSCCH,SL}(i) = P_{O_{PSCCH},SL} + 10\log_{10}\left(2^\mu * M_{RB}^{PSCCH}(i)\right) + \alpha_{PSCCH,SL} * PL_{SL2}$$

wherein $P_{PSCCH,SL}(i)$ is the sixth transmit power, $P_{OPSCCH,SL}$ is the fourth receive power, $\mu$ is a constant coefficient, $M_{RB}^{PSCCH}(i)$ is the quantity of second RBs, $\alpha_{PSCCH,SL}$ is the fourth compensation factor, and $PL_{SL2}$ is the second SL pathloss.

15. A power control method, wherein the method is applied to a base station device, and the method comprises: sending first information, wherein the first information comprises one or more of the following: a power control parameter of a sidelink positioning reference signal SL-PRS, a power control parameter of a physical sidelink control channel PSCCH, maximum transmit power of a terminal device, a quantity of resource blocks RBs occupied by a first resource used to transmit the SL-PRS, a quantity of RBs occupied by a second resource used to transmit the PSCCH, and downlink DL pathloss reference signal configuration information; and the first resource and the second resource belong to a same resource pool.

16. A power control apparatus, comprising various functional modules configured to implement the method according to any one of claims 1 to 14 or according to claim 15.

17. A power control apparatus, comprising a processor, wherein the processor is coupled to a memory, and the memory is configured to store a computer program; and when the processor invokes the computer program, the apparatus is enabled to perform the method according to any one of claims 1 to 14 or according to claim 15.

18. A computer-readable medium, wherein the computer-readable medium stores a program code to be executed by a computer, and the program code comprises instructions for performing the method according to any one of claims 1 to 14 or according to claim 15.

19. A computer program product, wherein the computer program product comprises a computer program code; and when the computer program code is run on a computer, the computer is enabled to perform the method according to any one of claims 1 to 14 or according to claim 15.

(a)

(b)

(c)

FIG. 1

FIG. 2

EP 4 694 390 A1

Base station | First terminal device

S310: First information

S320: Determine, based on the first information, first transmit power at which the first terminal device transmits an SL-PRS through a first resource

S330: Second information

S340: Determine, based on the second information, second transmit power at which the first terminal device transmits a PSCCH through a second resource

FIG. 3

Apparatus 400

Processing module 410

Transceiver module 420

FIG. 4

Apparatus 500

Memory 510

Processor 520

Communication interface 530

Bus 540

FIG. 5

## INTERNATIONAL SEARCH REPORT

| International application No. |
| --- |
| **PCT/CN2024/090571** |

**A. CLASSIFICATION OF SUBJECT MATTER**

H04W 52/18(2009.01)i; H04W52/24(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; 3GPP: 侧行, 边链路, 直通链路, 功率控制参数, 参考信号, 发射功率, 发送功率, 基站, SL, PRS, PSCCH, Sidelink, Power, Control, Parameter, Reference, signal, Transmit, Base, station

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117014945 A (VIVO MOBILE COMMUNICATION CO., LTD.) 07 November 2023 (2023-11-07)<br>claims 1-26 | 1-19 |
| X | CN 115707077 A (DATANG MOBILE COMMUNICATIONS EQUIPMENT CO., LTD.) 17 February 2023 (2023-02-17)<br>description, paragraphs [0274]-[0290] and [0543]-[0559], and figures 1-5 | 15-19 |
| Y | CN 115707077 A (DATANG MOBILE COMMUNICATIONS EQUIPMENT CO., LTD.) 17 February 2023 (2023-02-17)<br>ibid. | 1-19 |
| X | CN 114845371 A (RESEARCH INSTITUTE OF CHINA MOBILE COMMUNICATIONS CORP. et al.) 02 August 2022 (2022-08-02)<br>description, paragraphs [0055]-[0104] | 15-19 |
| Y | CN 114845371 A (RESEARCH INSTITUTE OF CHINA MOBILE COMMUNICATIONS CORP. et al.) 02 August 2022 (2022-08-02)<br>ibid. | 1-19 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **11 July 2024** | **13 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 694 390 A1**

## INTERNATIONAL SEARCH REPORT

International application No.

**PCT/CN2024/090571**

### C.    DOCUMENTS CONSIDERED TO BE RELEVANT

| Category* | Citation of document, with indication, where appropriate, of the relevant passages | Relevant to claim No. |
|---|---|---|
| X | CN 115552984 A (BEIJING XIAOMI MOBILE SOFTWARE CO., LTD.) 30 December 2022 (2022-12-30)<br>claims 1-22 and figures 1-11 | 15-19 |
| Y | CN 115552984 A (BEIJING XIAOMI MOBILE SOFTWARE CO., LTD.) 30 December 2022 (2022-12-30)<br>ibid. | 1-19 |
| X | WO 2023065362 A1 (GUANGDONG OPPO MOBILE TELECOMMUNICATIONS CORP., LTD.) 27 April 2023 (2023-04-27)<br>description, page 3, line 5 to page 13, line 15, and figures 1-12 | 15-19 |
| Y | WO 2023065362 A1 (GUANGDONG OPPO MOBILE TELECOMMUNICATIONS CORP., LTD.) 27 April 2023 (2023-04-27)<br>ibid. | 1-19 |
| A | WO 2022170512 A1 (NOKIA SHANGHAI BELL CO., LTD. et al.) 18 August 2022 (2022-08-18)<br>entire document | 1-19 |

Form PCT/ISA/210 (second sheet) (July 2022)

**INTERNATIONAL SEARCH REPORT**
Information on patent family members

International application No.

**PCT/CN2024/090571**

| Patent document cited in search report | | | Publication date (day/month/year) | Patent family member(s) | | | Publication date (day/month/year) |
|---|---|---|---|---|---|---|---|
| CN | 117014945 | A | 07 November 2023 | WO | 2023208181 | A1 | 02 November 2023 |
| CN | 115707077 | A | 17 February 2023 | WO | 2023020032 | A1 | 23 February 2023 |
| CN | 114845371 | A | 02 August 2022 | | None | | |
| CN | 115552984 | A | 30 December 2022 | WO | 2024026795 | A1 | 08 February 2024 |
| WO | 2023065362 | A1 | 27 April 2023 | CN | 117751634 | A | 22 March 2024 |
| WO | 2022170512 | A1 | 18 August 2022 | EP | 4292354 | A1 | 20 December 2023 |

Form PCT/ISA/210 (patent family annex) (July 2022)

**REFERENCES CITED IN THE DESCRIPTION**

**Patent documents cited in the description**

- CN 202310539674